# EUROPEAN PATENT SPECIFICATION

(11) **EP 3 429 768 B1**
(45) Date of publication and mention of the grant of the patent: **25.12.2019**
(21) Application number: 17724618.8
(22) Date of filing: 16.03.2017
(51) Int. Cl.: B09C 1/02, B09C 1/08, A62D 3/00, A62D 101/04, A62D 101/22

(54) **PROCESS FOR TREATING SOILS CONTAMINATED BY ORGANIC NON-HYDROCARBON WATER INSOLUBLE POLLUTANTS**
VERFAHREN ZUR BEHANDLUNG VON MIT ORGANISCHEN, WASSERUNLÖSLICHEN, NICHT-KOHLENWASSERSTOFFHALTIGEN VERUNREINIGTEN BÖDEN
PROCÉDÉ DE TRAITEMENT DE SOLS CONTAMINÉS PAR DES POLLUANTS ORGANIQUES NON-HYDROCARBURES INSOLUBLES DANS L'EAU

(30) Priority: 17.03.2016 IT UA20161761
(43) Date of publication of application: 23.01.2019
(73) Proprietor: Eni Rewind S.p.A., 20097 San Donato Milanese (MI) (IT)
(72) Inventor: BAGATIN, Roberto, 20025 Legnano (IT); GESUINO, Careddu, 20861 Brugherio (IT); MARCO, Tagliabue, 20093 Cologno Monzese (IT)
(74) Representative: Murgitroyd & Company
(86) International application number: PCT/IB2017/051528
(87) International publication number: WO 2017/158547

(56) References cited:
- EP-A1- 2 727 662
- WO-A1-89/07014
- US-A1- 2004 082 828
- US-B1- 6 273 263

## Description

The present invention concerns a decontamination process.

More specifically, the present invention concerns a process for treating a soil contaminated by organic non-hydrocarbon water insoluble pollutants, comprising the concentration of said pollutants in a fraction of "fine particles" of soil and the separation of the latter from the other fractions of soil. The aforementioned fraction of "fine particles" of the soil in which the organic non-hydrocarbon water insoluble pollutants are concentrated, which is smaller than the total quantity of soil treated, may be decontaminated through further appropriate treatments or sent for disposal under safe conditions.

The process according to the present invention also differs due to the fact that no liquid contaminants are produced to be subjected to decontamination treatment prior to recycling or release into the environment.

Contamination of soil by organic pollutants is a hugely significant problem due to its negative impacts on the protection of the environment and human health; such contamination may derive from the preparation, storage, transport, use or disposal processes of potentially polluting compounds under conditions that are not sufficiently controlled and/or not very safe.

Among organic pollutants, those that are water insoluble pose further contamination problems: in fact, the chemical/physical properties of these pollutants cause remarkable persistence in the environment and the ability to accumulate in organisms, with severe consequences for the environment and health.

For example, these pollutants include water insoluble halogenated pesticides, whose very widespread and uncontrolled use in agriculture, particularly in the past, is responsible for environmental contamination phenomena, still significant on a global level.

Numerous international treaties now impose limits on the use of these pesticides, sometimes even prohibiting their use. A particular case is that of DDT (*p*-dichloro-diphenyl-trichloroethane), one of the most common pesticides in the world, whose use is still permitted in some countries, particularly to combat malaria epidemics, despite the fact that numerous studies have definitively demonstrated its harmful effects on the environment and on the health of superior organisms (A. Binelli, A. Provini, "DDT is still a problem in developed countries: the heavy pollution of Lake Maggiore" (2003) Chemosphere, vol. 52, pag. 717-723).

The treatment of soils contaminated by organic pollutants is a complex process, due to the fact that this definition comprises numerous compounds with different chemical/physical properties, often present in the soil in mixtures between one another.

In general, the technologies used for treating soils contaminated by organic pollutants are split into three categories: containment/immobilization, destruction and separation/concentration. Containment/immobilization technologies comprise, for example, sequestration or barriers, for the purpose of limiting the spread of the pollutants; destruction technologies comprise, for example, incineration, chemical oxidation and bioremediation. Finally, separation technologies are used to extract the pollutants into more concentrated phases so as to reduce the volume to be subjected to further treatment or for disposal.

In particular, separation and concentration treatments applicable to soils contaminated by specific organic pollutants such as halogenated pesticides comprise, for example, "soil washing", thermal desorption, extraction with solvents, supercritical CO₂ extraction and heating through radiofrequencies (R. N. Koustas, D. Fischer, "Review of Separation Technologies, for Treating Pesticide-Contaminated Soil" (1998), J. Air & Waste Manage. Assoc., vol. 48 pag. 434-440).

"Soil washing" methods are particularly effective for treating soils characterized by multiple contaminations. Such methods envisage *ex situ* processes of physical separation and/or chemical extraction useful for extracting the organic pollutants from the soil, which can therefore be re-emitted into the environment or sent for further chemical/physical or biological treatments.

These methods are prevalently based on the use of water or aqueous solutions and exploit the relative differences in the chemical/physical properties of the organic pollutants, of the substrate in which they are dispersed and of the washing liquid (water or aqueous solutions) for the purpose of promoting the passage of the pollutants themselves from the solid to the liquid phase.

In "soil washing" there are one or more separation steps of the treated soil, so as to separate the coarser particles from the "fine particles", according to their size and density, which may be sent for further decontamination processes or for disposal.

Although not connected with any theory, pollutants, in fact, preferably accumulate in the "fine particles" fraction, probably due to the higher surface area available for the adsorption of the pollutants themselves by the latter.

In the prior art there are various examples of soil treatment through "soil washing". For example, US 5,128,068 describes a method for treating particulate material contaminated by heavy metals, radioactive isotopes and organic compounds comprising the steps of subjecting said particulate material to washing with solutions containing leaching agents and/or surfactants, then mechanically separating a first fraction comprising the "coarse particles", substantially free from contaminants, then washing in a countercurrent flow the fraction comprising the intermediate sized particles to separate the "fine particles" and subjecting the suspension obtained to an attrition process to promote the further separation of the "fine particles". It is important to note that in US 5,128,068 the combination of repeated steps of washing in countercurrent and separation allows most of the contaminants in the washing solutions to be removed and a fraction to be isolated exclusively comprising "fine particles", characterized by maximum contamination.

In some cases the "soil washing" may be performed at high temperatures.

For example, international patent application WO 99/04914 describes a process for decontaminating soils (for example from industrial solvents and light hydrocarbon fractions) that comprises mixing the soil with water in a reactor, possibly in the presence of oxidizing agents or precursors of such agents, heating the mixture until water vapor is formed and the contaminants are desorbed (or their oxidation products) from the soil by the vapor thus released, collecting the water vapor and desorbed contaminants in a condenser, then treating the condensates and recovering the soil thus decontaminated.

To contrast the formation of agglomerates of soil particles, the physical separation step within the scope of a "soil washing" method may comprise an energetic mixing step, defined as "attrition scrubbing", in which the soil, previously mixed with water or with suitable aqueous solutions so as to form a "slurry", undergoes an energetic rubbing action through the use of an appropriate high power mixer.

The main effects of the attrition comprise the rubbing and dispersion of the agglomerates, hence promoting the mechanical removal of the contaminants that coat the surface of the particles and obtaining uniform slurries comprising very fine particles. The application of the attrition operation increases the efficiency of the subsequent washing and separation operations on the contaminated fractions, promoting the concentration of the contaminants in the washing fluid (D. Feng, L. Lorenzen, C. Aldrich, P.W. Mare, "Ex Situ Diesel Contaminated Soil Washing with Mechanical Methods" (2001), Minerals Engineering, vol. 14, pag. 1093-1100) or in the fraction of finer soil (M.A. Marino, R.M. Brica, C.N. Neale, "Heavy Metal Soil Remediation: The Effects of Attrition Scrubbing on a Wet Gravity Concentration Process" (1997), Environmental Progress, vol. 16, pag. 208-214). It is, however, important to note that attrition is not comparable to grinding as it does not alter the particle size distribution of the original soil.

For example, international patent application WO 2013/086641 describes a "soil washing" process for soils contaminated by wood preservatives (e.g. pentachlorophenol, polychlorodibenzodioxins and polychlorodibenzofurans) through leaching with alkaline solutions in the presence of surfactants which, in one embodiment, may envisage a preliminary attrition step producing a decontaminated soil, a contaminated sludge (to be send to the leaching process) and a contaminated liquid (to be sent to a water treatment process). According to the authors of WO 2013/086641, the attrition step may help to improve the diffusion of the contaminants from the soil particles to the aqueous solution.

In some cases, characterized in that attrition alone has not been shown to be effective for treatment purposes, the use of a further grinding step has been described, applied simultaneously to the attrition, and performed by adding particulate material having abrasive properties on the damp contaminated soil (T. Neesse, F. Schaaff, H. Tiefel, "High Performance Attrition in Stirred Mills" (2004), Minerals Engineering, vol. 17, pag. 1163-1167). The pollutants can in this way be concentrated into a fraction of soil comprising particles with smaller sizes than 10 µm produced artificially; however, whereas on one hand, an improvement in the effectiveness of the attrition process is displayed, on the other hand the production of extremely fine particles can make the subsequent separation operation more complicated (e.g. floatation of the pollutant-enriched particles may be necessary rather than simple screening thereof).

Numerous methods for decontaminating soils from organic water insoluble pollutants, even other than "soil washing", may comprise the vigorous shaking of the treated soil, possibly in the presence of reactive agents that promote the degradation of the contaminants.

For example, WO 01/83038 A1 describes a process for the degradation of halogenated organic pollutants, such as DDT and its DDE derivatives (dichloro-diphenyl-dichloroethylene) and DDD (dichloro-diphenyl-dichloroethane), Dieldrin (1,2,3,4,10,10-hexachloro-1,4,4a,5,6,7,8,8a-octahydro-6,7-epoxy-1,4:5,8-dimethylnaphthalene), PCB (polychlorobiphenyl), Dioxin (2,3,7,8-tetrachloro-dibenzo[b,e]-1,4-dioxane), Lindane (hexachlorocyclohexane) which envisages a soil grinding operation, preferably in a ball mill, in the presence of one or more reactive agents including urea, ferrous sand, steelworks slag and appropriately selected acids. In particular, the effect of grinding is to provide energy in the form of heat, sufficient to bring the temperature of the treated soil to between 70°C and 140°C and therefore promote the degrading action of the pollutants by the aforementioned reactive agents.

European patent application EP 2727662 regards a process of treating of a contaminated soil by at least one organic non hydrocarbon water insoluble pollutant like DDT, comprising the steps of:
a. extracting said contaminated soil from the environment;
b. subjecting said soil to a screening to separate particles with size below a predetermined value < 100 mm;
c. adding to the first screened fraction a first aqueous liquid containing enzymes thus obtaining a slurry;
d. stirring said slurry so that the enzymes catalyze the degradation of said pollutant;
e. separate the liquid from the treated solid.

However, such process does not appear to fully meet the most severe requirements of soil recovery.

Solutions of the prior art have possible margins for improvement, both regarding the decontamination efficiency, particularly in the presence of complex mixtures of organic pollutants and in relation to the cost/effectiveness ratio. It is in fact clear that many methods, for the purpose of improving the effectiveness of the treatment, resort to the use of chemical agents or envisage wasting large amounts of mechanical or heat energy.

It is therefore still necessary to identify new solutions to the problem of soils contaminated by organic water insoluble pollutants, in particular organic non-hydrocarbon water insoluble pollutants which can, at least in part, overcome the drawbacks described above.

It is therefore an object of the present invention to provide a process for treating a soil contaminated by organic non-hydrocarbon water insoluble pollutants, by means of the concentration of said pollutants, in a fraction of soil comprising "fine particles". The latter may subsequently be sent for further treatment processes (e.g. thermal desorption) or disposed of in waste dumps for hazardous waste. The remaining fraction of soil may be re-introduced into the environment or destined for other uses (e.g. building, agriculture) safely. The drastic reduction in the quantity of contaminated soil for treatment or disposal leads to a reduction in treatment and/or disposal costs, with definite advantages compared to processes of the prior art. A distinctive characteristic of the method is also that of not producing liquids contaminated in turn by said organic non-hydrocarbon pollutants and therefore to be subjected to specific treatments prior to any recycling or release into the environment.

The process according to the present invention is scalable and can therefore also be applied to large volumes of contaminated soil; with appropriate adaptations, it can also be performed on a continuous basis.

Further characteristics and advantages of the present invention will become clear from the following detailed description.

In the description of the embodiments of the present invention, the use of the terms "comprising" and "containing" indicates that the options described, for example regarding the steps of a method or of a process or the components of a product or of a device, are not necessarily all-inclusive. It is however important to note that the present application also relates to the embodiments in which the term "comprising" in relation to the options described, e.g. regarding the steps of a method or of a process or the components of a product or of a device, must be interpreted as "which essentially consists of" or "which consists of", even if this is not explicitly stated.

For the purpose of the present description and following claims, the definitions of the numeric ranges always include the extremes unless specified otherwise.

For the purpose of the present description and following claims, the percentages are always by weight, except in cases in which it is specified otherwise.

For the purpose of the present invention, organic non-hydrocarbon water insoluble pollutants mean any organic substance responsible for soil pollution phenomena, whose chemical formula comprises carbon, hydrogen and at least one heteroatom (e.g. N, O, P, halogen), characterized by water solubility of less than 10 mg/L. In a preferred aspect, said solubility is less than 0.1 mg/L and more preferably the solubility is comprised between 0.001 mg/L and 0.01 mg/L.

For the purpose of the present invention, the term "pesticide" means any substance or mixture of substances adapted to repel, destruct or reduce all forms of harmful organisms such as insects, rodents, fungi, algae, plants, microorganisms, etc. In particular, the term "halogenated water insoluble pesticide" means any water insoluble pesticide comprising at least one halogen atom and in particular belonging to the group WG02, according to the classification of the United States Environmental Protection Agency (EPA) based on the properties of contaminated waste (U.S. Environmental Protection Agency, "Contaminants and Remedial Options at Pesticide Sites" (1994), EPA/600/R-94-202).

For the purpose of the present invention, the term "derivative" or "organic pollutant derivative" means a chemical compound produced by chemical, biological or metabolic degradation of the aforementioned pollutant. For example, the pesticide DDT is transformed into DDE derivatives (by dehydrohalogenation) and DDD (by dehalogenation). The set of compounds, DDT, DDE and DDD is usually identified by the acronym DDX.

For the purpose of the present invention, derivatives that are shown to be just as hazardous to the environment and health as the corresponding precursor organic pollutant are considered significant.

For the purpose of the present invention, fraction of "coarse particles" means a fraction of soil comprising particles having sizes greater than or equal to 2 mm; fraction of "intermediate particles" means a fraction of soil comprising particles having sizes comprised between 63 µm and 2 mm; fraction of "fine particles" means a fraction of soil comprising particles having sizes less than or equal to 63 µm. The aforementioned particle size classification of the fractions of soil is taken from the Engineering Bulletin "Soil Washing Treatment" (1990) of the EPA (EPA/540/2-90/017).

For the purpose of the present invention "size" in relation to the particles of soil, means the diameter of the particles when they are substantially spherical or, in the case of particles with an elongated shape, the largest dimension of said particles. The particle size distribution may be determined through Static Light Scattering techniques, e.g. with a Beckman Coulter LS 13 320 analyzer, according to methods known to a person skilled in the art.

For the purpose of the present invention "agglomerate" (used as a noun or as an adjective) means a portion of the material or substrate of which the soil is made, comprising a set of individual particles of the same or different size as each other. In relation to the size of the aforementioned individual particles, the sizes of the agglomerate may vary from the micrometric scale (< 50 µm) to more than 10 cm.

For the purpose of the present invention "slurry" means a fluid mixture of a liquid with a suspended solid where said solid is present in a percentage comprised between 50 and 90% and preferably between 60 and 85 %.

The present invention relates to a process of treating a contaminated soil by at least one organic non-hydrocarbon water insoluble pollutant, comprising the steps of:
a) extracting said contaminated soil from the environment;
b) subjecting said soil to a first screening to separate, and remove from the extracted soil, "coarse particles" of soil, obtaining a first screened fraction comprising "intermediate particles" and "fine particles" of soil;
c) adding to the first screened fraction a first aqueous liquid in a percentage comprised between 20 and 40% by weight relative to the total soil weight, obtaining a first "slurry";
d) subjecting said first "slurry" to attrition;
e) diluting said first "slurry" by adding a second aqueous liquid up to a percentage comprised between 10% and 60% by weight with respect to the total weight of the first "slurry", obtaining a second "slurry";
f) subjecting said second "slurry" to maturation, optionally by slow stirring;
g) treating said second "slurry" after maturation in order to separate the liquid phase from the solid phase;
h) drying said solid phase;
i) subjecting said dried solid phase to a second screening to separate and remove the fraction of the "intermediate particles" of soil and isolate the fraction of the "fine particles" of soil.

In a preferred aspect of the present invention, the organic non-hydrocarbon water insoluble pollutant may be selected from the group consisting of a halogenated water insoluble pesticide, at least one derivative of said halogenated water insoluble pesticide, and a mixture thereof.

In a preferred embodiment of the present invention, said water insoluble halogenated pesticide is DDT.

In a preferred aspect of the present invention, the at least one halogenated water insoluble pesticide may be selected from the group comprising DDE, DDD and a mixture thereof.

In a preferred aspect of the invention, prior to treatment the soil may be subjected to a preliminary drying step.

Said preliminary drying step may be performed before or after extracting the soil from the environment. When the preliminary drying step follows the extraction of the soil from the environment, it may be performed in static mode, by transferring the soil into a suitable container (e.g. one or more vats, tanks, etc.) keeping the soil itself in said container for an appropriate amount of time. Alternatively, one or more rotary dryers may be used. Said preliminary drying step may be performed at atmospheric pressure or at reduced pressure, possibly by applying heat, until the weight of the dried soil is lower than the initial weight by a percentage comprised between 2 and 20 %.

In a preferred aspect of the invention, the weight of the dried soil may be lower with respect to the initial weight by a percentage comprised between 3 and 10 %.

In any case, after being extracted from the environment and possibly after the preliminary drying step, the soil is subjected to a first screening.

The first screening of the aforementioned soil during step b) may be performed with any device able to separate particulate material based on the size of the particles.

In a preferred aspect, the first screening may be performed on the soil extracted from the environment after removing the larger crushed stone and debris having a diameter greater than 5 cm.

For the first screening, mechanical separators can be used whose operation may be based on size difference (such as rotary drums, vibrating sieve separators, screens and sieves), or sedimentation speed difference (such as cyclone separators) or density difference (such as density oscillators).

In a preferred aspect, the first screening may be performed with one or more mechanical separators or a combination thereof.

The choice of device for the first screening may be made based on the desired processivity, i.e. according to the volume of soil to be treated per unit of time.

This operation may be performed continuously or discontinuously.

In a preferred aspect of the invention, the first screening may be performed with screens having mesh sizes of 2 mm.

Through the first screening step b) it is possible to separate and remove from the extracted soil the fraction of "coarse particles" of soil and at the same time isolate the fraction of "intermediate particles" and the fraction of "fine particles" of soil.

Together the fraction of "intermediate particles" and the fraction of "fine particles" of soil constitute the so-called "first screened fraction".

In a preferred aspect, the first screened fraction may comprise particles of soil having sizes less than or equal to 2 mm.

It is important to note that the aforementioned first screened fraction may contain up to 100% and preferably from 95% to 99% with respect to the quantity of contaminants originally present in the soil.

A first aqueous liquid is added to the aforementioned first screened fraction during step c) in order to obtain a first "slurry".

For the purpose of the present invention, aqueous liquid means a liquid in which, due to its very low water solubility, the aforementioned organic pollutants are not soluble, i.e. in which the solubility of said pollutants, and the derivatives of said pollutants, is lower than 10 mg/L. In a preferred aspect, said aqueous liquid may be comprised of water in the percentage of at least 70% by weight with respect to the total weight of the aqueous liquid itself, and may possibly comprise one or more organic and/or inorganic compounds, in solution and/or in suspension. Preferably, said aqueous liquid may be comprised of water in a percentage comprised between 80% and 100% by weight and more preferably in a percentage comprised between 85% and 95% by weight with respect to the total weight of the aqueous liquid itself.

Organic compounds possibly contained in the aqueous liquid may be, for example, oxidizing agents, reducing agents, chelating agents or other compounds which, for example, can promote the degradation of the aforementioned organic non-hydrocarbon water insoluble pollutants in water, as long as said organic compounds are acceptable for the environment and do not promote the solubilization of the aforementioned organic pollutants in the aqueous liquid itself.

Inorganic compounds possibly contained in the aqueous liquid may be, for example, salts acceptable for the environment, as long as said inorganic compounds do not promote the solubilization of the aforementioned organic pollutants in the aqueous liquid itself. "Acceptable for the environment" means that the organic and/or inorganic compound is not toxic, harmful or irritating at the concentration used in the aqueous liquid and, with reference to an organic compound, in the conditions of use is biodegradable.

In a particularly preferred aspect of the invention, said first aqueous liquid is water.

In a preferred aspect, said first aqueous liquid may be added in a quantity comprised between 15% and 35% by weight with respect to the total weight of said first screened fraction of treated soil.

It is important to note that the process according to the present invention is performed without using chemical agents that promote the solubilization of the organic non-hydrocarbon pollutant or its derivatives (e.g. surfactants, leaching agents, etc.), so as not to promote the transfer of the pollutant itself into the aqueous liquid, leading to the necessity of a decontaminating treatment for said aqueous liquid prior to its disposal.

In a preferred aspect, step c) may be performed at room temperature.

The attrition step d) performed on the first "slurry" may be carried out with any device suitable for the purpose. For example, it may be performed in "attrition scrubbers", "pebble mills" or similar equipment.

In a preferred aspect, the attrition step d) may be performed for a time comprised between 15 minutes and 3 hours.

More preferably, said attrition step d) may be performed for a time comprised between 30 minutes and 2 hours.

During the attrition, the soil slurry is subjected to energetic stirring, promoting the uniform distribution of the solid particles and causing continuous collisions between particles and particles. These collisions may promote the breaking of the agglomerates allowing suspended particles of different sizes to be obtained.

As previously pointed out, attrition does not alter the particle size distribution of the original soil.

After attrition the "slurry" of soil particles may be diluted during step e) with a second aqueous liquid.

In a preferred aspect, the second aqueous liquid may be added to the first "slurry" during step e) of said process, in a percentage comprised between 50% and 60% by weight with respect to the weight of the first "slurry".

The second aqueous liquid may be the same or different from the first aqueous liquid, and has the same characteristics as the first aqueous liquid specified above.

In a preferred aspect, said second aqueous liquid may be water.

After the dilution of step e) of the process, the second "slurry" thus obtained may be subjected to a maturation step.

For the purpose of the present invention, maturation means the ageing of the "slurry", i.e. keeping said "slurry" optionally in slow stirring conditions, at constant temperature and pressure for a predetermined time.

This time, which may vary according to the type of pollutant and its concentration in the polluted soil, may be determined through the analysis of samples of said soil taken during the maturation step, and corresponds to the minimum time required for the organic non-hydrocarbon water insoluble pollutant present in the contaminated soil to be transferred and stabilized (i.e. its concentration does not change significantly over time) in the fraction of "fine particles" of the soil itself. For the purpose of the present invention, slow stirring means stirring performed by means of mechanical stirrers (e.g. blade, paddle stirrers etc.) or other devices (e.g. orbital shakers, rotary stirrers, etc.), maintained at rotation values comprised between 1 and 10 rotations per minute, preferably comprised between 2 and 5 rotations per minute.

It therefore appears clear that the maturation step f) of the present process is fundamentally important and its duration is connected with the effectiveness of the process itself in order to concentrate the organic non-hydrocarbon water insoluble pollutant in the fraction of "fine particles" of soil.

In a preferred aspect of the invention the maturation step f) may be performed at temperatures comprised between 4 and 50°C. In a further preferred aspect said step may be performed at temperatures comprised between 10 and 40°C.

In a preferred aspect, the maturation step f) of the present process may be performed for a time comprised between 30 minutes and 4 hours, under slow stirring at values comprised between 1 and 10 rotations per minute.

In a preferred aspect of the present invention, the maturation step f) may comprise the sub-steps of:
i. keeping said second "slurry" under slow stirring for a time comprised between 15 and 120 minutes, then
ii. keeping said second "slurry" without stirring for a further time comprised between 15 and 120 minutes.

It is important to note that during the maturation step f) within the second "slurry" no separation of phases is seen, i.e. there is no settling.

Only after maturation, the second "slurry" of soil particles can be subjected in step g) of the process to a treatment that aims to separate the liquid phase from the solid phase of said "slurry".

Said treatment may be performed with any method and technology able to separate a liquid from a solid.

In a preferred aspect, the treatment of step g) may be performed through filtration of the second "slurry". In this case it is possible to use, for example, one or more press filters, vacuum filters, screw presses, rotary presses, auger presses, membrane presses.

In another preferred aspect, said treatment of step g) may be performed through centrifugation of the second "slurry". In this case it is possible to use, for example, one or more centrifugal decanters.

The treatment of step g) with the methods described above, allows a solid phase to be obtained characterized by a water content of less than 20% by weight and preferably a water content comprised between 3% and 10% by weight.

It is important to note that the concentration of organic non-hydrocarbon water insoluble pollutant and/or any derivatives in the liquid phase separated during step g) is extremely low, less than 1 µg/L and preferably comprised between 0.1 and 0.5 µg/L. For this reason, said liquid phase may be disposed of without further treatments.

In an alternative embodiment of the present invention, the separation treatment of step g) may be performed through heating the second "slurry". Said treatment is performed for an appropriate time in order to promote the evaporation of the water contained therein.

In a preferred aspect, when the separation treatment of step g) is performed by heating the second "slurry", said treatment may be performed at temperatures comprised between 30°C and 60°C and at pressures comprised between 0.1 and 1 bar.

In this alternative embodiment, said treatment of step g) may be performed using, for example, one or more rotary dryers.

In this alternative embodiment of the present invention, after the treatment of step g) performed through heating, the solid phase obtained may be characterized by a water content less than 3% and preferably by a water content comprised between 0.5% and 2%.

In that case, optionally, the subsequent step h) may be excluded and the solid phase may be subjected directly to the second screening step i).

In the other cases, i.e. in the embodiments in which the treatment of step g) is not performed by heating the second "slurry" and/or evaporating the water contained in said second "slurry", it is necessary to further remove the water content to values less than 3% by weight, through a drying step h) of the solid phase. In a preferred aspect, the drying of the solid phase of step h) may be performed at a temperature comprised between 15°C and 40°C at room pressure. In a preferred aspect said drying may be performed at reduced pressure conditions, at pressures comprised between 0.01 and 0.5 bar.

The drying of step h) may be performed under static conditions (e.g. in vats, tanks, etc.), or using mechanical devices such as one or more rotary dryers.

In a preferred aspect, the final water content in the dried solid phase may be comprised between 0.5 and 2%.

The last step of the process consists of subjecting the dried solid phase to a second screening to separate and remove the fraction of "intermediate particles" of soil and isolate the fraction of "fine particles" of soil.

For the second screening, mechanical separators can be used whose operation may be based on size difference (such as rotary drums, vibrating sieve separators, screens and sieves), or sedimentation speed difference (such as cyclone separators) or density difference (such as density oscillators).

In a preferred aspect, the second screening may be performed with one or more mechanical separators or a combination thereof.

In a preferred aspect of the invention, the second screening may be performed with screens having mesh sizes of 63 µm.

The second screened fraction is essentially comprised of the fraction of "fine particles" of soil.

The analysis of a sample of particles of the second screened fraction, performed through extraction with organic solvents and gas chromatography/mass spectrometry as described in the standard methods EPA 3545A 2007 and EPA 8270D 2007 known to a person skilled in the art, shows that said fraction contains up to 99% and preferably 95% to 99% of the original quantity of the organic non-hydrocarbon water insoluble pollutant and/or its derivatives present in the soil to be treated.

It is therefore clear that with the process in accordance with the present invention it is possible to concentrate an organic non-hydrocarbon water insoluble pollutant, for example, a halogenated water insoluble pesticide, and/or one or more derivatives of said pollutant, in a quantitatively lower fraction of soil, represented by the fraction of "fine particles" of soil, equal to about 10% by weight with respect to the total weight of the soil treated. Consequently, the fractions of "coarse particles" and "intermediate particles" of the soil are free from said pollutant (and/or from its derivatives) and can therefore be re-introduced into the environment or used in agriculture or in building without risks to the environment and health. It is important to note that the process according to the present invention does not determine the transfer of the organic non-hydrocarbon water insoluble pollutant into the liquid phase, which can therefore potentially be recycled or disposed of at the end of the process without further treatments.

The fraction of "fine particles" can instead be subjected to further treatments described in the prior art, with chemical/physical or biological processes, for the purpose of definitively neutralizing the harmful effect of the aforementioned pollutant.

In a preferred aspect of the invention, the fraction of "fine particles" contaminated by the organic non-hydrocarbon water insoluble pollutant can be subjected to decontamination by heat treatment and consequent thermal destruction of said pollutant. Alternatively, the aforementioned fraction may be subjected to solidification and stabilization, biological treatments, or other treatments described in the art, such as, the extraction of the organic non-hydrocarbon water insoluble pollutant in water with solvents or with supercritical CO₂. For the purpose of putting the present invention into practice and illustrating it more clearly, below are some non-limitative examples.

### Example 1 (in accordance with the invention)

A 3.5 kg sample of soil contaminated by DDX (1010 mg/kg) was dried in an air flow and subjected to screening by means of a Retsch AS200 sieve shaker so as to isolate the fraction of particles with sizes less than 2 mm (hereinafter referred to in short as "screened soil"). The latter constitutes 99% by weight of the total and substantially contains the total quantity of the halogenated pesticide and/or its derivatives (1050 mg/kg). 3 kg of screened soil were placed in an Erweka PRS planetary stirrer assembled on an Erweka AR 403 system and 900 g of water were added. The mixture was stirred for 120 minutes at 90 rpm obtaining a first "slurry".

At the end, 600 g of the aforementioned "slurry" were diluted with water up to a total volume of 900 cm³.

The "slurry" thus obtained was stirred for 30 minutes at room temperature in a Rotax 6.8 (Velp Scientifica) rotary mixer at 5 rpm, then kept without stirring for another 30 minutes. After maturation, the "slurry" was subjected to filtration under vacuum on a Carlo Erba FPE204250 Buchner filter equipped with a polyethersulfone (PES) membrane with porosity of 0.22 µm.

The concentration of DDX in the permeate, measured through gas chromatography analysis according to the standard methods EPA 3545 A 2007 and EPA 8270 D 2007 was equal to 0.2 µg/L. It is therefore possible to conclude that the pesticide was not transferred into the liquid phase.

The solid phase, recovered from the filter, was left to dry for 8 hours at room temperature, then it was subjected to a second screening to isolate the fraction of "fine particles" (size less than or equal to 63 µm). The particle size analysis, performed through light scattering with a Coulter Beckman LS 13 320 analyzer, enabled the average size of the particles to be determined, which was 20 µm.

The aforementioned fraction of "fine particles" represents 8% by weight of the screened soil and contains 12,900 mg/kg of DDX, i.e. 98% by weight of the total DDX contained in the screened soil.

### Example 2 (comparative)

The experiment described in example 1 above was repeated, using a same sample of soil contaminated by DDX (1010 mg/kg) and following the same process, with the exception of the maturation step of the "slurry" which was performed for 5 minutes at room temperature in a Rotax 6.8 (Velp Scientifica) mixer at 5 rpm, and for a further 5 minutes without stirring. The fraction of "fine particles" obtained in this case represents 10% by weight of the screened soil and contains 7300 mg/kg of DDX, i.e. 70% by weight of the total DDX present in the screened soil, being the remaining percentage associated with the fraction of particles larger than 63 µm.

It is therefore clear that the maturation of the "slurry" is a critical step in order to maximize the concentration of the halogenated pesticide into a minority fraction of contaminated soil. Finally, it is however to be understood that further changes and variations may be made to the process described and illustrated herein which do not depart from the scope of the appended claims.

## Claims

1. Process for treating a soil contaminated by at least one organic non-hydrocarbon water insoluble pollutant, comprising the steps of:
a. extracting said contaminated soil from the environment
b. subjecting said soil to a first screening to separate, and remove from the extracted soil, "coarse particles" of soil, obtaining a first screened fraction comprising "intermediate particles" and "fine particles" of soil;
c. adding to the first screened fraction a first aqueous liquid in a percentage comprised between 20 and 40% by weight relative to the total soil weight, obtaining a first "slurry";
d. subjecting said first "slurry" to attrition;
e. diluting said first "slurry" by adding a second aqueous liquid up to a percentage comprised between 10% and 60% by weight with respect to the total weight of the first "slurry", obtaining a second "slurry";
f. subjecting said second "slurry" to maturation, optionally by slow stirring;
g. treating said second "slurry" after maturation in order to separate the liquid phase from the solid phase;
h. drying said solid phase;
i. subjecting said dried solid phase to a second screening to separate and remove the fraction of the "intermediate particles" of soil and isolate the fraction of "fine particles" of soil.

2. Process according to claim 1, wherein the organic non-hydrocarbon water insoluble pollutant is selected from the group consisting of a halogenated water insoluble pesticide, at least one derivative of said pesticide, and a mixture thereof.

3. Process according to claim 2, wherein said halogenated water insoluble pesticide is DDT and said at least one derivative of the halogenated water insoluble pesticide is selected from the group comprising DDE, DDD, and a mixture thereof.

4. Process according to any one of claims 1 to 3, in which the soil, before treatment, is subjected to a preliminary drying step.

5. Process according to any one of claims 1 to 4, wherein the first screened fraction includes soil particles having sizes less than or equal to 2 mm.

6. Process according to any one of claims 1 to 5, in which during step c) the first aqueous liquid is added to the first screened fraction in a percentage comprised between 15% and 35% by weight with respect to the total weight of said first screened fraction.

7. Process according to any one of claims 1 to 6, wherein the attrition step d) is carried out for a time comprised between 15 minutes and 3 hours.

8. Process according to any one of claims 1 to 7, wherein during step e) the second aqueous liquid is added to the first "slurry" in a percentage comprised between 50% and 60% by weight with respect to the weight of the first "slurry."

9. Process according to any one of claims 1 to 8, wherein the maturation step f) is conducted at temperatures comprised between 4 and 50 ° C.

10. Process according to any one of claims 1 to 9, wherein the maturation step f) is conducted for a time of between 30 minutes and 4 hours, under slow stirring between 1 and 10 rotations per minute.

11. Process according to any one of claims 1 to 9, wherein the maturation step f) comprises the following two sub-steps:
i. keeping said second "slurry" under slow stirring for a time comprised between 15 and 120 minutes, then
ii. keeping said second "slurry" without stirring for a further time comprised between 15 and 120 minutes.

12. Process according to any one of claims 1 to 11, wherein the treatment of step g) is effected by filtration of the second "slurry".

13. Process according to any one of claims 1 to 12, wherein the treatment of the stage g) is carried out by heating the second "slurry" and evaporating the water contained therein.

14. Process according to any one of claims 1 to 13, wherein the drying of the solid phase of step h) is conducted at a temperature between 15 ° C and 40 ° C, at ambient pressure.

15. Process according to any one of claims 1 to 14, wherein the fraction of "fine particles" contaminated by the organic non-hydrocarbon water insoluble pollutant is subjected to decontamination by heat treatment and consequent thermal destruction of said pollutant.

## Patentansprüche

1. Ein Verfahren zum Behandeln eines Bodens, der durch mindestens einen organischen, wasserunlöslichen Nicht-Kohlenwasserstoff-Schmutzstoff verunreinigt ist, beinhaltend die folgenden Schritte:
a. Entnehmen des verunreinigten Bodens aus der Umwelt;
b. Unterziehen des Bodens einer ersten Siebung, um "grobe Partikel" von Boden von dem entnommenen Boden zu trennen und daraus zu entfernen, wodurch eine erste gesiebte Fraktion, die "mittelgroße Partikel" und "feine Partikel" von Boden beinhaltet, erhalten wird;
c. Zugeben zu der ersten gesiebten Fraktion einer ersten wässrigen Flüssigkeit in einem Prozentanteil, der zwischen 20 und 40 Gew.-% in Bezug auf das Gesamtbodengewicht beträgt, wodurch ein erster "Schlamm" erhalten wird;
d. Unterziehen des ersten "Schlamms" einer Reibung;
e. Verdünnen des ersten "Schlamms" durch Zugeben einer zweiten wässrigen Flüssigkeit bis zu einem Prozentanteil, der zwischen 10 Gew.-% und 60 Gew.-%, bezogen auf das Gesamtgewicht des ersten "Schlamms", beträgt, wodurch ein zweiter "Schlamm" erhalten wird;
f. Unterziehen des zweiten "Schlamms" einer Reifung, optional durch langsames Rühren;
g. Behandeln des zweiten "Schlamms" nach der Reifung, um die flüssige Phase von der festen Phase zu trennen;
h. Trocknen der festen Phase;
i. Unterziehen der getrockneten festen Phase einer zweiten Siebung, um die Fraktion der "mittelgroßen Partikel" von Boden zu trennen und zu entfernen und die Fraktion der "feinen Partikel" von Boden zu isolieren.

2. Verfahren gemäß Anspruch 1, wobei der organische, wasserunlösliche Nicht-Kohlenwasserstoff-Schmutzstoff aus der Gruppe ausgewählt ist, die aus einem halogenierten, wasserunlöslichen Pestizid, mindestens einem Derivat des Pestizids und einer Mischung davon besteht.

3. Verfahren gemäß Anspruch 2, wobei das halogenierte, wasserunlösliche Pestizid DDT ist und das mindestens eine Derivat des halogenierten, wasserunlöslichen Pestizids aus der Gruppe ausgewählt ist, die DDE, DDD und eine Mischung davon beinhaltet.

4. Verfahren gemäß einem der Ansprüche 1 bis 3, wobei der Boden vor der Behandlung einem vorbereitenden Trocknungsschritt unterzogen wird.

5. Verfahren gemäß einem der Ansprüche 1 bis 4, wobei die erste gesiebte Fraktion Bodenpartikel mit Größen von weniger als oder gleich 2 mm umfasst.

6. Verfahren gemäß einem der Ansprüche 1 bis 5, wobei während Schritt c) die erste wässrige Flüssigkeit der ersten gesiebten Fraktion in einem Prozentanteil zugegeben wird, der zwischen 15 Gew.-% und 35 Gew.-%, bezogen auf das Gesamtgewicht der ersten gesiebten Fraktion, beträgt.

7. Verfahren gemäß einem der Ansprüche 1 bis 6, wobei der Reibungsschritt d) über eine Zeit ausgeführt wird, die zwischen 15 Minuten und 3 Stunden beträgt.

8. Verfahren gemäß einem der Ansprüche 1 bis 7, wobei während Schritt e) die zweite wässrige Flüssigkeit dem ersten "Schlamm" in einem Prozentanteil zugegeben wird, der zwischen 50 Gew.-% und 60 Gew.-%, bezogen auf das Gewicht des ersten "Schlamms", beträgt.

9. Verfahren gemäß einem der Ansprüche 1 bis 8, wobei der Reifungsschritt f) bei Temperaturen durchgeführt wird, die zwischen 4 und 50 °C betragen.

10. Verfahren gemäß einem der Ansprüche 1 bis 9, wobei der Reifungsschritt f) über eine Zeit, die zwischen 30 Minuten und 4 Stunden beträgt, unter langsamem Rühren mit zwischen 1 und 10 Umdrehungen pro Minute durchgeführt wird.

11. Verfahren gemäß einem der Ansprüche 1 bis 9, wobei der Reifungsschritt f) die folgenden zwei Teilschritte beinhaltet:
i. Halten des zweiten "Schlamms" unter langsamem Rühren über eine Zeit, die zwischen 15 und 120 Minuten beträgt, dann
ii. Halten des zweiten "Schlamms" ohne Rühren über eine weitere Zeit, die zwischen 15 und 120 Minuten beträgt.

12. Verfahren gemäß einem der Ansprüche 1 bis 11, wobei die Behandlung von Schritt g) durch eine Filtration des zweiten "Schlamms" bewirkt wird.

13. Verfahren gemäß einem der Ansprüche 1 bis 12, wobei die Behandlung der Stufe g) durch das Erhitzen des zweiten "Schlamms" und das Verdampfen des darin enthaltenen Wassers ausgeführt wird.

14. Verfahren gemäß einem der Ansprüche 1 bis 13, wobei das Trocknen der festen Phase von Schritt h) bei einer Temperatur von zwischen 15 °C und 40 °C bei Umgebungsdruck durchgeführt wird.

15. Verfahren gemäß einem der Ansprüche 1 bis 14, wobei die Fraktion der "feinen Partikel", die durch den organischen, wasserunlöslichen Nicht-Kohlenwasserstoff-Schmutzstoff verunreinigt ist, einer Dekontaminierung durch Wärmebehandlung und daraus folgender thermischer Zerstörung des Schmutzstoffes unterzogen wird.

## Revendications

1. Procédé destiné à traiter un sol contaminé par au moins un polluant organique non-hydrocarbure insoluble dans l'eau, comprenant les étapes consistant à :
a. extraire ledit sol contaminé de l'environnement
b. soumettre ledit sol à un premier criblage pour séparer, et retirer du sol extrait, des « grosses particules » de sol, obtenir une première fraction criblée comprenant des « particules intermédiaires » et des « particules fines » de sol ;
c. ajouter à la première fraction criblée un premier liquide aqueux dans un pourcentage compris entre 20 et 40 % en poids relativement au poids total de sol, obtenir une première « boue » ;
d. soumettre ladite première « boue » à attrition ;
e. diluer ladite première « boue » en ajoutant un deuxième liquide aqueux jusqu'à un pourcentage compris entre 10 % et 60 % en poids par rapport au poids total de la première « boue », obtenir une deuxième « boue » ;
f. soumettre ladite deuxième « boue » à maturation, facultativement par une agitation lente ;
g. traiter ladite deuxième « boue » après maturation afin de séparer la phase liquide de la phase solide ;
h. sécher ladite phase solide ;
i. soumettre ladite phase solide séchée à un deuxième criblage pour séparer et retirer la fraction des « particules intermédiaires » de sol et isoler la fraction de « particules fines » de sol.

2. Procédé selon la revendication 1, où le polluant organique non-hydrocarbure insoluble dans l'eau est sélectionné dans le groupe constitué d'un pesticide halogéné insoluble dans l'eau, d'au moins un dérivé dudit pesticide, et d'un mélange de ceux-ci.

3. Procédé selon la revendication 2, où ledit pesticide halogéné insoluble dans l'eau est du DDT et ledit au moins un dérivé du pesticide halogéné insoluble dans l'eau est sélectionné dans le groupe comprenant le DDE, le DDD, et un mélange de ceux-ci.

4. Procédé selon n'importe laquelle des revendications 1 à 3, dans lequel le sol, avant traitement, est soumis à une étape de séchage préliminaire.

5. Procédé selon n'importe laquelle des revendications 1 à 4, où la première fraction criblée inclut des particules de sol ayant des tailles inférieures ou égales à 2 mm.

6. Procédé selon n'importe laquelle des revendications 1 à 5, dans lequel durant l'étape c) le premier liquide aqueux est ajouté à la première fraction criblée dans un pourcentage compris entre 15 % et 35 % en poids par rapport au poids total de ladite première fraction criblée.

7. Procédé selon n'importe laquelle des revendications 1 à 6, où l'étape d) d'attrition est effectuée pendant une durée comprise entre 15 minutes et 3 heures.

8. Procédé selon n'importe laquelle des revendications 1 à 7, où durant l'étape e) le deuxième liquide aqueux est ajouté à la première « boue » dans un pourcentage compris entre 50 % et 60 % en poids par rapport au poids de la première « boue ».

9. Procédé selon n'importe laquelle des revendications 1 à 8, où l'étape f) de maturation est menée à des températures comprises entre 4 et 50 °C.

10. Procédé selon n'importe laquelle des revendications 1 à 9, où l'étape f) de maturation est menée pendant une durée d'entre 30 minutes et 4 heures, sous agitation lente entre 1 et 10 tours par minute.

11. Procédé selon n'importe laquelle des revendications 1 à 9, où l'étape f) de maturation comprend les deux sous-étapes suivantes :
i. le fait de garder ladite deuxième « boue » sous agitation lente pendant une durée comprise entre 15 et 120 minutes, puis
ii. le fait de garder ladite deuxième « boue » sans agitation pendant une durée supplémentaire comprise entre 15 et 120 minutes.

12. Procédé selon n'importe laquelle des revendications 1 à 11, où le traitement de l'étape g) est réalisé par filtration de la deuxième « boue ».

13. Procédé selon n'importe laquelle des revendications précédentes 1 à 12, où le traitement du stade g) est effectué en chauffant la deuxième « boue » et en faisant s'évaporer l'eau contenue dans celle-ci.

14. Procédé selon n'importe laquelle des revendications 1 à 13, où le séchage de la phase solide de l'étape h) est mené à une température d'entre 15 °C et 40 °C, à pression ambiante.

15. Procédé selon n'importe laquelle des revendications 1 à 14, où la fraction de « particules fines » contaminées par le polluant organique non-hydrocarbure insoluble dans l'eau est soumise à une décontamination par traitement thermique et destruction thermique consécutive dudit polluant.
